# EUROPEAN PATENT APPLICATION

(11) **EP 1 753 121 A2**
(43) Date of publication of application: **14.02.2007**
(21) Application number: 06016841.6
(22) Date of filing: 11.08.2006
(51) Int. Cl.: H02N 2/04

(54) **Actuator**

(30) Priority: 12.08.2005 JP 2005234645
(71) Applicant: Fujinon Corporation, Saitama-shi, Saitama (JP)
(72) Inventor: Shirie, Nobuyuki, Saitama-shi Saitama (JP)
(74) Representative: Klunker . Schmitt-Nilson . Hirsch

(57) **Abstract**

An actuator comprises: an electro-mechanical conversion element; a connecting member affixed to one side in an extension/contraction direction of the electro-mechanical conversion element; a rod-like driving frictional member affixed to the connecting member and positioned in parallel to the extension/contraction direction of the electro-mechanical conversion element; and a driven member frictionally engaged with the driving frictional member.

## Description

### Background of the Invention

### 1. Field of the Invention

The present invention relates to an actuator, and particularly relates to an actuator that is installed in a digital camera, mobile phone, or other compact precision apparatus and drives a zoom lens.

### 2. Description of the Related Art

As a driving device for a lens unit of a digital camera, etc., an actuator that employs a piezoelectric element is used. For example, with an actuator of Japanese Patent No. 2633066, a driving shaft is affixed to one side of a piezoelectric element, and the other side of the piezoelectric element is fixed to a main device body. A lens barrel is slidably supported on the driving shaft, and the lens barrel is frictionally engaged with the driving shaft by making use of an urging force of a plate spring. Drive pulses of substantially sawtooth-like waveform are applied to the piezoelectric element, and the piezoelectric element deforms at different speeds in an extension direction and a contraction direction. For example, when the piezoelectric element gradually deforms, the lens barrel moves along with the driving shaft. Oppositely, when the piezoelectric element rapidly deforms, the lens barrel stays at the same position due to its mass inertia. Thus, by repeatedly applying drive pulses of substantially sawtooth-like waveform to the piezoelectric element, the lens barrel can be moved intermittently at a fine pitch.

However, with the actuator of Japanese Patent No. 2633066, because the piezoelectric element and the driving rod, which are long in the driving direction, are disposed in series, the actuator is made long as a whole and it is difficult to secure housing space for the actuator. In particular, with an actuator for driving a zoom lens, the driving rod must be made long because the driving range is large and the length of the actuator thus became long. Thus, with the related-art actuator, there was no degree of freedom of shape and it was difficult for an actuator-installed apparatus to be made compact.

### Summary of the Invention

The present invention was made in view of such circumstances, and an object thereof is to provide an actuator with which the degree of freedom of shape is improved.

In order to achieve the above object, according to a first aspect of the invention, there is provided an actuator comprising: an electro-mechanical conversion element; a connecting member affixed to one side in an extension/contraction direction of the electro-mechanical conversion element; a rod-like driving frictional member affixed to the connecting member and positioned in parallel to the extension/contraction direction of the electro-mechanical conversion element; and a driven member frictionally engaged with the driving frictional member.

With the first aspect of the invention, because the electro-mechanical conversion element and the driving frictional member are connected via the connecting member, the need to position the electro-mechanical conversion element and the driving frictional member along a straight line is eliminated, and the degree of freedom in terms of shape is increased. Thus, with the first aspect of the invention, the actuator can be positioned even in a space that is small in the driving direction. Furthermore, with the first aspect of the invention, because the rod-like driving frictional member and the electro-mechanical conversion element are disposed in parallel, vibration of the electro-mechanical conversion element can be transmitted efficiently to the driving frictional member.

A second aspect of the invention provides the actuator according to the first aspect of the invention, the actuator further comprises a main body, and the connecting member is swingably supported with respect to the main body. Thus, with the second aspect of the invention, by making the electro-mechanical conversion element extend and contract, the connecting member is made to swing and the vibration of the electro-mechanical element is transmitted to the driving frictional member.

A third aspect of the inventionprovides the actuator according to the first or second aspect of the invention, wherein a weight member is mounted onto the other side in the extension/contraction direction of the electro-mechanical conversion element. The present invention is especially effective for an actuator in which a weight member, which is difficult to make compact, is mounted.

A fourth aspect of the invention provides the actuator according to any one of the first to third aspects of the invention, wherein a holding frame of a zoom lens is mounted onto the driven member.

### Brief Description of the Drawings

FIG. 1 is a perspective view of an actuator according to the present invention;
FIG. 2 is a sectional view of a connection portion of a driving shaft and a connecting block;
FIG. 3 shows diagrams of examples of voltage drive pulses that are applied to a piezoelectric element; and
FIG. 4 is a perspective view of an arrangement of an actuator of a comparative example.

### Detailed Description of the Invention

Preferred embodiments of an actuator according to the present invention shall now be described in detail with reference to the attached drawings.

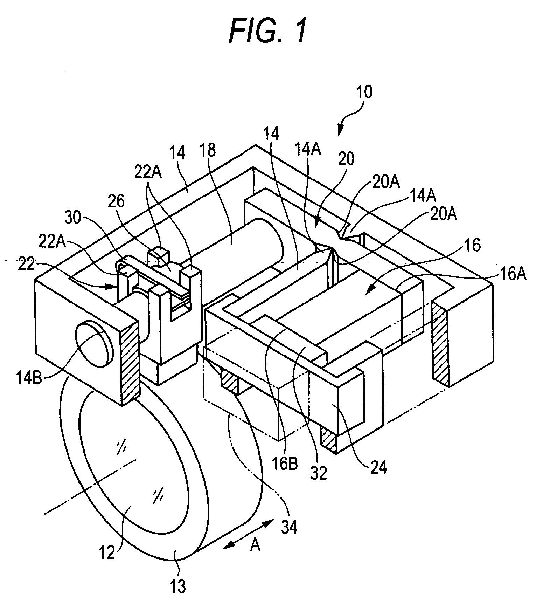

FIG. 1 is a perspective view of an arrangement of an actuator 10. The actuator 10 shown in the figure is installed in a mobile phone or other compact precision apparatus and is used as a driving device for moving a zoom lens, focusing lens, or other movable lens 12 in the directions of arrows A.

The actuator 10 is mainly arranged from a main body 14, a piezoelectric element (corresponding to being an electro-mechanical conversion element) 16, a driving shaft (corresponding to being a driving frictional member) 18, a connecting member 20, a connecting block (corresponding to being a driven member) 22, and a mounting bracket 24, and the main body 14 is fixed to a main body (not shown) of the compact precision apparatus.

The piezoelectric element 16 is layered along an optical axis P direction of the movable lens 12 and is arranged to deform (extend or contract) along the driving direction upon application of voltage. Thus, with the piezoelectric element 16, end faces 16A and 16B in the longitudinal direction become displaced along the driving direction upon application of voltage.

Of the end faces 16A and 16B of the piezoelectric element 16, the connecting member 20 is affixed to one end face 12A. The connecting member 20 is formed to a plate-like form of substantially rectangular shape, and a portion near the center thereof is swingably supported by the main body 14. That is, the connecting member 20 is supported in a manner enabling swinging about the point supported by the main body 14 as a fulcrum. The end face 16A of the piezoelectric element 16 is affixed to an end portion of the connecting member 20 located away from the fulcrum. The connecting member 20 can thus be swung by the extension/contraction of the piezoelectric element 16. The arrangement of the portion of engagement of the connecting member 20 and the main body 14 is not restricted in particular and, for example, V-shaped grooves 20A are formed in the connecting member 20 and wedge-like protrusions 14A that engage with the V-shaped grooves 20A may be formed on the main body 14.

A base end of the driving shaft 18 is affixed to an end portion of the connecting member 20 at the opposite side of the piezoelectric element 16 across the fulcrum. The driving shaft 18 is formed, for example, to a cylindrical shape and is positioned so that its central axis runs parallel to the longitudinal direction (the extension/contraction direction) of the piezoelectric element 16. A front end of the driving shaft 18 is inserted through and guided by a hole 14B, formed in the main body 14, and is supported in a manner enabling sliding in the axial direction. As the material of the driving shaft 14, a graphite crystal composite, such as carbon graphite, in which graphite crystals are compounded firmly, is used.

The connecting block 22 is engaged with the driving shaft 18. The connecting block 22 is connected to a holding frame 13 of the movable lens 12. The connecting block 22 is formed to a substantially rectangular shape and has upwardly protruding protrusions 22A respectively on the four corners thereof.

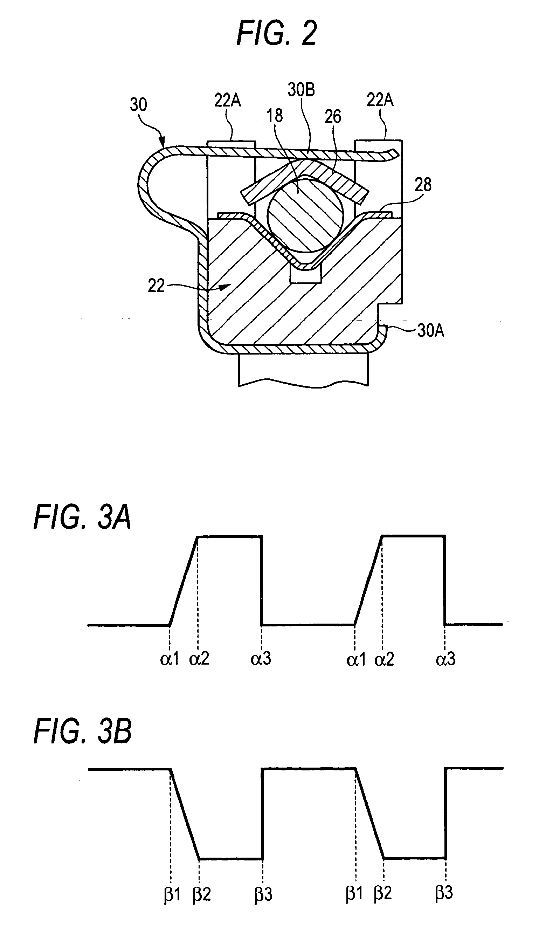

FIG. 2 is a sectional view of the connecting portion of the connecting block 22 and the driving shaft 18. As shown in this figure, a first sliding member 26 and a second sliding member 28 are provided at the connecting portion of the connecting block 22 and the driving shaft 18. The first sliding member 26 is disposed at an upper side of the driving shaft 18, and the second sliding member 28 is disposed at a lower side of the driving shaft 18. The first sliding member 26 and the second sliding member 28 are members that are provided to obtain a stable frictional force between the connecting block 22 and the driving shaft 18 and are formed, for example, from stainless steel.

The second sliding member 28 is formed to a V-shape and is fixedtotheconnectingblock22. Meanwhile, the first slidingmember 26 is formed to an inverted V-shape and is positioned in a region surrounded by the four protrusions 22A of the connecting block 22. The first sliding member 26 is notched at its respective corner portions in accordance with the protrusions 22A of the connecting block 22. Thus, when the first sliding member 26 is positioned in the region surrounded by the protrusions 22A, the first sliding member 26 is prevented from falling off from the connecting block 22.

A pressing spring 30 is mounted onto the connecting block 22. The pressing spring 30 is arranged by bending a metal plate and is mounted onto the connecting block 22 by hitching a claw 30A onto a lower portion of the connecting block 22. The pressing spring 30 also has a pressing portion 30B that is positioned on an upper side of the first sliding member 26 and is arranged to urge the first sliding member 26 downward by the pressing portion 30B. The driving shaft 18 is thereby put in a state of being sandwichingly pressed by the first sliding member 26 and the second sliding member 28, and the connecting block 22 is frictionally engaged with the driving shaft 18 via the first sliding member 26 and the second sliding member 28. The frictional force between the connecting block 22 and the driving shaft 18 is set so that when drive pulses of a gradual voltage variation is applied to the piezoelectric element 16, the frictional force is greater than the driving force, and when drive pulses of a rapid voltage variation is applied to the piezoelectric element 16, the frictional force is less than the driving force. Here, the frictional force (sliding resistance) is preferably no less than 10gf and no more than 30gf and more preferably no less than 15gf and no more than 25gf.

As shown in FIG. 1, aweightmember32, formedofasoftmaterial, is fixed by adhesion onto the end face 16B at the other side of the piezoelectric element 16. By applying a load to the end face 16B, the weight member 32 prevents the end face 16B from becoming displaced more than the end face 16A. Thus, as the weight member 32, a member that is greater in weight than the driving shaft 18 is preferable. Also, the weight member 32 is formed of a material with a Young's modulus less than that of each of the piezoelectric element 16 and the driving shaft 18 and, for example, is formed of a material with a Young's modulus of no more than 300MPa. For example, the weight member 32 is formed of urethane rubber or urethane resin, etc., and is manufactured by mixing a powder of tungsten or other metal into the rubber or resin to make the specific gravity high. To achieve compact size, the specific gravity of the weight member 32 is preferably made as high as possible and is set, for example, to approximately 8 to 12.

The face of weight member 32 at the side opposite the piezoelectric element 16 is adhered onto the mounting bracket 24. The mounting bracket 24 is formed by bending a thin metal plate to a square C-shape and the bent portions at both ends thereof are mounted onto the main body 14. The piezoelectric element 16 is thus supported on the main body 14 via the weight member 32 and the mounting bracket 24.

The piezoelectric element 16 that is supported as described above is supported in a manner in which the end face 16B can be displaced along the driving direction. That is, the end face 16B of the piezoelectric element 16 can be displaced along the driving direction by the expansion or contraction of the soft weight member 32.

The voltages of the drive pulses shown in FIGS. 3A and 3B are applied to the piezoelectric element 16. FIG. 3A shows the drive pulses for moving the connecting block 22 of FIG. 1 in the left direction, and FIG. 3B shows the drive pulses for moving the connecting block 22 of FIG. 1 in the right direction.

In the case of FIG. 3A, substantially sawtooth-like drive pulses, each of which rises gradually from a time α1 to a time α2 and drops rapidly at a time α3, are applied to the piezoelectric element 16. Thus, from the time α1 to the time α2, the piezoelectric element 16 extends gradually. The connecting member 20 that is affixed to the end face 16A of the piezoelectric element 16 swings and the driving shaft 18 of FIG. 1 is displaced in the left direction. Because in this process, the driving shaft 18 moves at a gradual speed, the connecting block 22 moves along with the driving shaft 18. The connecting block 22 of FIG. 1 can thereby be moved in the leftdirection. Meanwhile, at the time α3, the piezoelectric element 16 contracts rapidly, the connectingmember 20 swings, and the driving shaft 18 moves in the right direction. Because in this process, the driving shaft 18 moves rapidly, the connecting block 22 remains stopped at the same position due to inertia and just the driving shaft 18 moves. Thus, by applying the sawthooth-like drive pulses shown in FIG. 3A repeatedly, the connecting block 22 of FIG. 1 is made to repeat movement in the left direction and stoppage, and can thus be moved in the left direction.

In the case of FIG. 3B, substantially sawtooth-like drive pulses, each of which drops gradually from a time β1 to a time β2 and rises rapidly at a time β3, are applied to the piezoelectric element 16. Thus, from the time β1 to the time β2, the piezoelectric element 16 contracts gradually. The connecting member 20 that is affixed to the end face 16A of the piezoelectric element 16 swings and the driving shaft 18 of FIG. 1 is displaced in the right direction. Because in this process, the driving shaft 18 is displaced at a gradual speed, the connecting block 22 moves along with the driving shaft 18. The connecting block 22 of FIG. 1 can thereby be moved in the right direction. Meanwhile, at the time β3, the piezoelectric element 16 extends rapidly, the connecting member 20 swings, and the driving shaft 18 moves in the left direction. Because in this process, the driving shaft 18 moves rapidly, the connecting block 22 remains stopped at the same position due to inertia and just the driving shaft 18 moves. Thus, by applying the sawthooth-like drive pulses shown in FIG. 3B repeatedly, the connecting block 22 of FIG. 1 is made to repeat movement in the right direction and stoppage, and can thus be moved in the right direction.

The actions of the actuator 10 arranged as described above shall now be described.

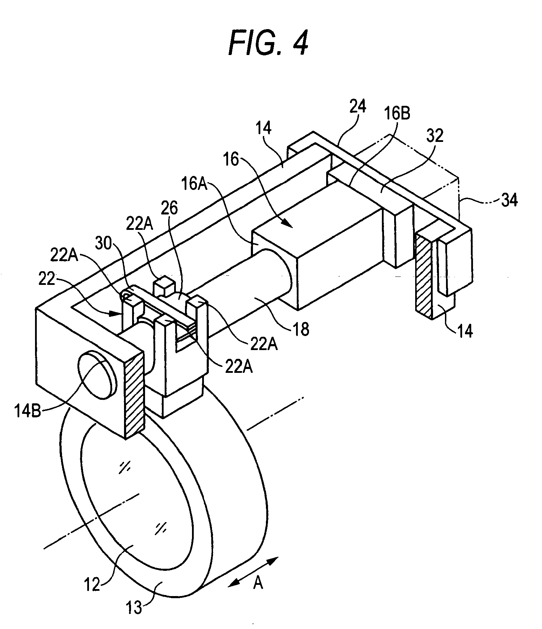

FIG. 4 is a perspective view of an actuator of a comparative example. With the actuator of the comparative example that is shown in this figure, a piezoelectric element 16 and a driving shaft 18 are connected in series. That is, the driving shaft 18 is affixed directly onto an end face 16A of the piezoelectric element 16, and these components are positioned so that a longitudinal direction of the piezoelectric element 16 is matched with an axial direction of the driving shaft 18. The actuator, with which the piezoelectric element 16 and the driving shaft 18 are thus positioned in series, cannot be made short in the driving direction and becomes thin and long as a whole. A special, long, thin installation space is thus required in an equipment in which the actuator is installed and it is difficult to make the equipment compact. In particular, when a zoom lens is to be driven, because the driving range is large in comparison to a case of driving a focusing lens, the driving shaft 18 must be made long, and because the actuator is thus made even longer in the driving direction, it is difficult to make the actuator-installed equipment compact.

Meanwhile, with the actuator 10 of the present embodiment, the piezoelectric element 16 and the driving shaft 18 are positioned in parallel and the actuator 10 can be made short in the driving direction. That is, it is sufficient for the length of the actuator 10 to be substantially the same as the length of the driving shaft 18 and can be made shorter than the arrangement shown in FIG. 4 by the length of the piezoelectric element 16. Because a special, long, thin installation space is thus not required in the equipment in which the actuator 10 is installed, the actuator-installed equipment can be made compact.

Although with the embodiment described above, a small weight member 32 is disposed between the end face 16A of the piezoelectric element 16 and the mounting bracket 24, the shape and position of the weight member are not limited thereto and, for example, a large weight member 34 may be mounted onto an outer side of the mounting bracket 24 as indicated by the alternate long and two short dashes line in FIG. 1. Even in this case, the actuator 10 can be prevented from becoming long in the driving direction. That is, whereas when the weight member 34, indicated by the alternate long and two short dashes line, is mounted onto the outer side of the mounting bracket 24 in the arrangement of the comparative example of FIG. 4, the actuator becomes large in the driving direction by the amount of the weight member 34, with the embodiment shown in FIG. 1, because the weight member is not disposed along an extension of the driving shaft 18, the actuator does not become long in the driving direction.

Also, although in the embodiment described above, the piezoelectric element 16 and the driving shaft 18 are affixed onto the same face of the connecting member 20, the present invention is not restricted thereto, and the two components may instead be affixed onto faces at opposite sides. Furthermore, the positioning of the piezoelectric element 16 and the driving shaft 18 is not restricted to a parallel positioning.

Also, although in the embodiment described above, the connecting member 20 is swingably supported with respect to the main body 14 by the engagement of the grooves 20A of the connecting member 20 with the protrusions 14A of the main body 14, the present invention is not restricted thereto, and pivotal support by a pin, etc., may be arranged. Furthermore, arrangements may be made to enable changing of the position of the swinging fulcrum (working point) along the longitudinal direction of the connecting member 20. In this case, because the ratio of the distance from the swinging fulcrum to (the center of) the piezoelectric element 16 and the distance from the swinging fulcrum to (the center of) the driving shaft 18 can be changed, the vibration of the piezoelectric element 16 can be transmitted in an amplified or attenuated manner to the driving shaft 18.

Also, as applications of the actuator according to the present invention, applications, for example, to digital cameras, mobile phones, and other compact precision apparatuses are possible. In particular, with a mobile phone, driving must be performed at a low voltage of no more than 3V, and by using the actuator according to the present invention, driving at a high frequency of approximately 20kHz is enabled and the holding frame 13 can be moved at a high speed of no less than 2mm/s. Thus, even a zoom lens requiringmovement of approximately 10mm can be moved rapidly.

Also, although the embodiment was described above as an actuator for driving a zoom lens, the present invention is not restricted thereto and may be applied to an actuator for driving a focusing lens. Thinning in the movement direction of the lens can be accomplished in this case as well. Also, applications of the actuator according to the present invention are not restricted to applications of moving focusing lenses, zoom lenses, and other movable lenses, and use in applications in which a CCD is moved is also possible.

Although the material of the weight member 32 in the present invention is not restricted to the above-described soft material and a hard material maybe used, the use of a soft material is preferable from the following points. That is, by using the weight member 32 formed of a soft material, the resonance frequency of the system arranged from the piezoelectric element 16, the driving shaft 18, the connecting member 20, and the weight member 32 is made low. By the resonance frequency being made low, effects due to scattering among arrangements of the piezoelectric element 16, the driving shaft 18, the connecting member 20, and the weight member 32 are lessened, and a stable driving force can be obtained. Also, by the resonance frequency f₀ being made low, the driving frequency f can be set readily in a vibration-proof region of f≥2^{½}.f₀ to lessen the effects of resonance and enable a stable driving force to be obtained. Because the driving force due to extension and contraction of the piezoelectric element 16 is thereby transmitted to the driven member reliably, the driven member can be moved accurately in the extension/contraction direction of the piezoelectric element 16. Also, because the effects due to resonance are lessened by the resonance frequency f₀ being made low, the supporting position and supporting method of the actuator can be selected arbitrarily and, for example, the actuator can be supported at a side face of the piezoelectric element 16 or a side face or an end face of driving shaft 18.

With the actuator according to the present invention, because the electro-mechanical conversion element and the driving frictional member are connected via the connecting member, the need to position the electro-mechanical conversion element and the driving frictional member along a straight line is eliminated, the degree of freedom of shape is increased, and the actuator can be positioned even in a space that is small in the driving direction.

The entire disclosure of each and every foreign patent application from which the benefit of foreign priority has been claimed in the present application is incorporated herein by reference, as if fully set forth.

## Claims

1. An actuator comprising:
an electro-mechanical conversion element;
a connecting member affixed to one side in an extension/contraction direction of the electro-mechanical conversion element;
a rod-like driving frictional member affixed to the connecting member and positioned in parallel to the extension/contraction direction of the electro-mechanical conversion element; and
a driven member frictionally engaged with the driving frictional member.

2. The actuator according to Claim 1, further comprising a main body,
wherein the connecting member is swingably supported with respect to the main body.

3. The actuator according to Claim 1,
wherein a weight member is mounted onto the other side in the extension/contraction direction of the electro-mechanical conversion element.

4. The actuator according to Claim 1,
wherein a holding frame of a zoom lens is mounted onto the driven member.
